(19)

Europäisches
Patentamt
European
Patent Office
Office européen
des brevets

(11) **EP 3 269 758 A1**

(12) **EUROPEAN PATENT APPLICATION**
published in accordance with Art. 153(4) EPC

(43) Date of publication:
**17.01.2018 Bulletin 2018/03**

(21) Application number: **16761707.5**

(22) Date of filing: **07.03.2016**

(51) Int Cl.:
*C08J 3/12* (2006.01)    *C08J 3/24* (2006.01)

(86) International application number:
**PCT/JP2016/056983**

(87) International publication number:
**WO 2016/143739 (15.09.2016 Gazette 2016/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.03.2015 JP 2015046987**

(71) Applicant: **SDP Global Co., Ltd.
Tokyo 103-0023 (JP)**

(72) Inventors:
• **MIYAJIMA, Toru
Tokyo 103-0023 (JP)**
• **MATSUBARA, Yusuke
Tokyo 103-0023 (JP)**
• **MORITA, Eiji
Tokyo 103-0023 (JP)**
• **KAWAMURA, Kosuke
Tokyo 103-0023 (JP)**

(74) Representative: **Vossius & Partner
Patentanwälte Rechtsanwälte mbB
Siebertstrasse 3
81675 München (DE)**

(54) **METHOD FOR PRODUCING AQUEOUS LIQUID ABSORBENT RESIN PARTICLES, AND ABSORBENT BODY AND ABSORBENT ARTICLE**

(57)    Provided are aqueous-liquid absorbent resin particles in which the aqueous-liquid absorbent resin is not blocked regardless of working environment or weather condition, and that have excellent powder feedability and absorption performance under a load. The present invention pertains to aqueous-liquid absorbent resin articles (P) obtained by a production method comprising at least two steps of surface crosslinking step for crosslinking, by using a surface crosslinking agent (c), the surfaces of resin particles (B) containing a crosslinked polymer (A) of which the essential constitutional unit is formed of a water-soluble vinyl monomer (a1), and/or a vinyl monomer (a2) that bocomes a water-soluble vinyl monomer (a1) through hydrolysis, and a crosslinking agent (b). The surface crosslinking agent (c) used is different between the first surface crosslinking step and the second crosslinking step.

EP 3 269 758 A1

**Description**

TECHNICAL FIELD

The present invention relates to a method for producing aqueous-liquid absorbent resin particles, and an absorbent and an absorbent article each including aqueous-liquid absorbent resin particles produced by this production method.

BACKGROUND ART

Currently, absorbents including hydrophilic fiber such as pulp and aqueous-liquid absorbent resins produced mainly from acrylic acid (salt) are widely utilized for sanitary materials such as disposable diapers, sanitary napkins, and incontinence pads. From the viewpoint of recent improvement in QOL (quality of life), demands for such sanitary materials are shifting to those of lighter weight or of smaller thickness, and following this tendency, reduction of usage of hydrophilic fiber with lower density has been demanded. Accordingly, the usage of an aqueous-liquid absorbent resin with high hygroscopicity has been increased, and there are increasingly occurring problems such as production line clogging or aggregate contamination caused by blocking of an aqueous-liquid absorbent resin under certain working environment or climate conditions.

As a means for obtaining an aqueous-liquid absorbent resin less prone to moisture absorption blocking, there have been known (1) a method of forming physical spaces by adding an inorganic compound such as kaolin, talc and silica, (2) a method of forming gel gaps by suppressing adhesion of swollen gel particles by surface-treating with a hydrophobic polymer small in surface free energy, such as modified silicone, and (3) salts of polyvalent metals (e.g., aluminum sulfate) (see, for example, Patent Documents 1 to 3). However, these methods, which can improve moisture absorption blocking, are problematic in that the amount of absorption under load lowers or in that friction of powder increases and transportability thereof deteriorates.

PRIOR ART DOCUMENTS

PATENT DOCUMENTS

Patent Document 1: JP-A-2002-523526
Patent Document 2: WO 95/33558
Patent Document 3: JP-A-62-007745

SUMMARY OF THE INVENTION

PROBLEMS TO BE SOLVED BY THE INVENTION

The object of the present invention is to provide aqueous-liquid absorbent resin particles in which the aqueous-liquid absorbent resin does not block regardless of working environment or climate conditions and which are superior in absorption performance under load and in powder feeding properties.

SOLUTIONS TO THE PROBLEMS

The present inventor studied earnestly in order to attain the above-mentioned object, and as a result, has accomplished the present invention by finding that the above object can be attained by forming a multilayered shell structure by surface crosslinking. That is, the present invention relates to a method for producing aqueous-liquid absorbent resin articles (P) comprising at least two surface crosslinking steps of crosslinking with a surface crosslinking agent (c) the surfaces of resin particles (B) containing a crosslinked polymer (A) having, as essential constitutional units, a water-soluble vinyl monomer (a1) and/or a vinyl monomer (a2) to be converted into the water-soluble vinyl monomer (a1) by hydrolysis and a crosslinking agent (b), wherein different surface crosslinking agents (c) are used in the first surface crosslinking step and the second crosslinking step; an absorbent containing aqueous-liquid absorbent resin articles (P) produced by the above production method; and an absorbent article comprising the above absorbent.

ADVANTAGES OF THE INVENTION

It will be understood by the person skilled in the art that aqueous-liquid absorbent resin particles (P) produced by the production method of the present invention solve the above-described problem by the above-mentioned configuration and have superior characteristics described in detail hereinbelow. In particular, the particles are superior in moisture absorption blocking properties and powder feeding properties and sanitary materials such as diapers can be produced therefrom stably under various use conditions.

MODE FOR CARRYING OUT THE INVENTION

The method for producing aqueous-liquid absorbent resin articles (P) of the present invention includes at least two surface crosslinking steps of crosslinking with a surface crosslinking agent (c) the surfaces of resin particles (B) containing a crosslinked polymer (A) having, as essential constitutional units, a water-soluble vinyl monomer (a1) and/or a vinyl monomer (a2) to be converted into the water-soluble vinyl monomer (a1) by hydrolysis and a crosslinking agent (b), wherein different surface crosslinking agents (c) are used in the first surface crosslinking step and the second crosslinking step.

The water-soluble vinyl monomer (a1) is not particularly limited, and there can be used such conventional monomers as vinyl monomers having at least one water-soluble substituent and an ethylenically unsaturated group disclosed in paragraphs 0007 to 0023 of Japanese Patent No. 3648553 (e.g., anionic vinyl monomers, nonionic vinyl monomers, and cationic vinyl monomers), anionic vinyl monomers, nonionic vinyl monomers, and cationic vinyl monomers disclosed in paragraphs 0009 to 0024 of JP-A-2003-165883, and vinyl monomers having at least one group selected from the group consisting of a carboxy group, a sulfo group, a phosphono group, a hydroxy group, a carbamoyl group, an amino group, and an ammonio group disclosed in paragraphs 0041 to 0051 of JP-A-2005-75982.

The vinyl monomer (a2) that turns into the water-soluble vinyl monomer (a1) by hydrolysis [hereinafter, also referred to as hydrolyzable vinyl monomer (a2)] is not particularly limited, and there can be used such conventional vinyl monomers as vinyl monomers having at least one hydrolyzable substituent that turns into a water-soluble substituent by hydrolysis disclosed in paragraphs 0024 to 0025 of Japanese Patent No. 3648553, and vinyl monomers having at least one hydrolyzable substituent [such as 1,3-oxo-2-oxapropylene (-CO-O-CO-) group, an acyl group, and a cyano group] disclosed in paragraphs 0052 to 0055 of JP-A-2005-75982. The water-soluble vinyl monomer as used herein means a vinyl monomer soluble in an amount of at least 100 g in 100 g of water at 25°C. The hydrolyzability of the hydrolyzable vinyl monomer (a2) means a property to be hydrolyzed by the action of water and, if necessary, of a catalyst (e.g., an acid or a base), thereby becoming water-soluble. Although the hydrolysis of the hydrolyzable vinyl monomer (a2) may be carried out during polymerization, after polymerization, or both during and after polymerization, the hydrolysis is preferably carried out after polymerization from the viewpoint of the absorption performance of aqueous-liquid absorbent resin particles (P) to be obtained.

Among these, preferred from the viewpoint of absorption performance are water-soluble vinyl monomers (a1), more preferred are anionic vinyl monomers and vinyl monomers having a carboxy (salt) group, a sulfo (salt) group, an amino group, a carbamoyl group, an ammonio group, or a mono-, di- or tri-alkylammonio group, even more preferred are vinyl monomers having a carboxy (salt) group or a carbamoyl group, particularly preferred are (meth) acrylic acid (salts) and (meth) acrylamide, particularly preferred are (meth)acrylic acids (salts), and most preferred are acrylic acid (salts).

The "carboxy (salt) group" means a "carboxy group" or a "carboxylate group", and the "sulfo (salt) group" means a "sulfo group" or a "sulfonate group." The (meth) acrylic acid (salt) means acrylic acid, a salt of acrylic acid, methacrylic acid, or a salt of methacrylic acid and the (meth)acrylamide means acrylamide or methacrylamide. Examples of such salts include salts of alkali metal (lithium, sodium, potassium, etc.), salts of alkaline earth metal (magnesium, calcium, etc.), and ammonium ($NH_4$) salts. Among these salts, salts of alkali metals and ammonium salts are preferred from the viewpoint of absorption performance, salts of alkali metals are more preferred, and sodium salts are particularly preferred.

When one of a water-soluble vinyl monomer (a1) and a hydrolyzable vinyl monomer (a2) is contained as a constitutional unit, a single species of each of the monomers may be contained as a constitutional unit or, alternatively, two or more species may be contained as constitutional units, if necessary. The same is also applied to the case where both a water-soluble vinyl monomer (a1) and a hydrolyzable vinyl monomer (a2) are contained as constitutional units. When both the water-soluble vinyl monomer (a1) and the hydrolyzable vinyl monomer (a2) are contained as constitutional units, their contained molar ratio [(a1)/(a2)] is preferably from 75/25 to 99/1, more preferably from 85/15 to 95/5, particularly preferably from 90/10 to 93/7, and most preferably from 91/9 to 92/8. Within such ranges, further improved absorption performance is achieved.

In addition to the water-soluble vinyl monomer (a1) and/or the hydrolyzable vinyl monomer (a2), an additional vinyl monomer (a3) copolymerizable with them can be contained as a constitutional unit of the crosslinked polymer (A). The additional vinyl monomer (a3) may be used singly or two or more of the same may be used in combination.

The additional copolymerizable vinyl monomer (a3) is not particularly limited and conventional hydrophobic vinyl monomers (e.g., hydrophobic vinyl monomers disclosed in paragraphs 0028 to 0029 of Japanese Patent No. 3648553, vinyl monomers disclosed in paragraph 0058 of JP-A-2003-165883 and JP-A-2005-75982) can be used, and specifically, the following vinyl monomers (i) to (iii) can be used.

(i) Aromatic ethylenic monomers having 8 to 30 carbon atoms

Styrenes, such as styrene, $\alpha$-methylstyrene, vinyltoluene, and hydroxystyrene, and vinylnaphthalene and halogenated forms of styrene, such as dichlorostyrene, etc.

(ii) Aliphatic ethylenic monomers having 2 to 20 carbon atoms

Alkenes (e.g., ethylene, propylene, butene, isobutylene, pentene, heptene, diisobutylene, octene, dodecene, and octadecene), and alkadienes (e.g., butadiene and isoprene), etc.

(iii) Alicyclic ethylenic monomers having 5 to 15 carbon atoms

Monoethylenically unsaturated monomers (e.g., pinene, limonene, and indene) ; and polyethylenic vinyl monomers (e.g., cyclopentadiene, bicyclopentadiene, and ethylidene norbornene), etc.

From the viewpoint of absorption performance, the content (mol%) of the additional vinyl monomer (a3) unit, based on the total number of moles of the water-soluble vinyl monomer (a1) unit and the hydrolyzable vinyl monomer (a2) unit, is preferably from 0 to 5, more preferably from 0 to 3, even more preferably from 0 to 2, and particularly preferably from 0 to 1.5, and from the viewpoint of absorption performance, etc., the content of the additional vinyl monomer (a3) is most preferably 0 mol%.

The crosslinking agent (b) is not particularly limited, and conventional crosslinking agents (e.g., crosslinking agents having two or more ethylenically unsaturated groups, crosslinking agents having at least one functional group capable of reacting with a water-soluble substituent and having at least one ethylenically unsaturated group and crosslinking agents having at least two functional groups each capable of reacting with a water-soluble substituent disclosed in paragraphs 0031 to 0034 of Japanese Patent No. 3648553, crosslinking agents having two or more ethylenically unsaturated groups, crosslinking agents having an ethylenically unsaturated group and a reactive functional group and crosslinking agents having two or more reactive substituents disclosed in paragraphs 0028 to 0031 of JP-A-2003-165883, crosslinkable vinyl monomers disclosed in paragraph 0059 of JP-A-2005-75982 and crosslinkable vinyl monomers disclosed in paragraphs 0015 to 0016 of JP-A-2005-95759) can be used. Among these, from the viewpoint of absorption performance, etc., crosslinking agents having two or more ethylenically unsaturated groups are preferred; triallyl cyanurate, triallyl isocyanurate, and poly(meth)allyl ethers of polyols having 2 to 10 carbon atoms are more preferred; triallyl cyanurate, triallyl isocyanurate, tetraallyloxyethane, and pentaerythritol triallyl ether are particularly preferred; and pentaerythritol triallyl ether is most preferred. The crosslinking agent (b) may be used singly or two or more of the same may be used in combination.

The content (mol%) of the crosslinking agent (b) units is preferably 0.001 to 5 based on the total number of moles of the water-soluble vinyl monomer (a1) units and the hydrolyzable vinyl monomer (a2) units, more preferably 0.005 to 3, and particularly preferably 0.01 to 1. Within such ranges, the absorption performance is further improved.

The resin particles (B) containing the crosslinked polymer (A) can be produced by, heating, drying and pulverizing according to needs, a hydrous gel polymer (composed of a crosslinked polymer and water) prepared by conventional aqueous solution polymerization (adiabatic polymerization, film polymerization, spray polymerization, etc.; e.g., JP-A-55-133413) or conventional reverse phase suspension polymerization (e.g., JP-B-54-30710, JP-A-56-26909, and JP-A-1-5808). The crosslinked polymer (A) contained in the resin particles (B) may be of a single type and also may be a mixture of two or more types thereof.

Preferred of polymerization methods is a solution polymerization method, and the aqueous solution polymerization method is particularly preferred because it does not need use of an organic solvent, etc. and it is thus advantageous in cost aspect, and an adiabatic aqueous solution polymerization method is most preferred in that a water-soluble absorbent resin having a large water retention amount and a small amount of water-soluble components is obtained and the temperature control during polymerization is unnecessary.

When performing aqueous solution polymerization, a mixed solvent containing water and an organic solvent can be used, and examples of the organic solvent include methanol, ethanol, acetone, methyl ethyl ketone, N,N-dimethylformamide, dimethyl sulfoxide, and mixtures of two or more thereof.

When performing aqueous solution polymerization, the amount (% by weight) of an organic solvent used is preferably 40 or less, and more preferably 30 or less, based on the weight of water.

When using a catalyst for polymerization, a conventional catalyst for radical polymerization can be used and examples thereof include azo compounds [e.g., azobisisobutyronitrile, azobiscyanovaleric acid, and 2,2'-azobis(2-amidinopropane) hydrochloride], inorganic peroxides (e.g., hydrogen peroxide, ammonium persulfate, potassium persulfate, and sodium persulfate), organic peroxides [e.g., benzoyl peroxide, di-tert-butyl peroxide, cumene hydroperoxide, succinic acid peroxide, and di(2-ethoxyethyl) peroxydicarbonate], and redox catalysts (combinations of a reducing agent such as alkali metal sulfite or bisulfite, ammonium sulfite, ammonium bisulfite and ascorbic acid, and an oxidizing agent such as alkali metal persulfates, ammonium persulfate, hydrogen peroxide, and organic peroxides) . These catalysts may be used singly and two or more thereof may be used in combination. The amount (% by weight) of the radical polymerization catalyst used is preferably 0.0005 to 5, and more preferably 0.001 to 2, based on the total weight of the water-soluble vinyl monomer (a1), the hydrolyzable vinyl monomer (a2), and the other vinyl monomer (a3) used, if necessary.

When applying a suspension polymerization method or an reverse phase suspension polymerization method as a polymerization method, the polymerization may be carried out in the presence of a conventional dispersing agent or a conventional surfactant, if necessary. In the case of an reverse phase suspension polymerization method, the polymerization can be carried out using a conventional hydrocarbon solvent such as xylene, n-hexane, and n-heptane.

The polymerization onset temperature can appropriately be adjusted depending on the type of the catalyst to be used, and it is preferably 0 to 100°C, and more preferably 5 to 80°C.

When a solvent (organic solvents, water, etc.) is used for polymerization, it is preferred to distill off the solvent after the polymerization. When an organic solvent is contained in the solvent, the content (% by weight) of the organic solvent after distillation, based on the weight of the crosslinked polymer (A), is preferably 0 to 10, more preferably 0 to 5, particularly preferably 0 to 3, and most preferably 0 to 1. When the content is within such ranges, the absorption performance of the aqueous-liquid absorbent resin particles (P) is further improved.

When water is contained in the solvent, the content (% by weight) of water after distillation, based on the weight of the crosslinked polymer (A), is preferably 0 to 20, more preferably 1 to 10, particularly preferably 2 to 9, and most preferably 3 to 8. Within such ranges, further improved absorption performance is achieved.

The hydrous gel polymer to be produced by polymerization may be chopped, if necessary. The size (longest diameter) of the chopped gel is preferably from 50 $\mu$m to 10 cm, more preferably from 100 $\mu$m to 2 cm, and particularly preferably from 1 mm to 1 cm. When the size is within such ranges, dryability during a drying step is further improved.

Chopping can be carried out by a conventional method and chopping can be done by using a known chopping machine (e.g., Bex Mill, a rubber chopper, Pharma Mill, a mincing machine, an impact type pulverizer, a roll type pulverizer), etc.

The contents of an organic solvent and water can be determined from the weight loss of a sample when heating it with an infrared moisture content analyzer {e.g., JE400 manufactured by KETT; 120±5°C, 30 minutes, atmosphere humidity before heating: 50±10%RH, lamp specification: 100 V, 40 W}.

As a method of distilling off a solvent (including water), a method of distilling (drying) it with hot blast having a temperature of from 80 to 230°C, a thin film drying method using, e.g., a drum dryer heated at 100 to 230°C, a (heating) reduced pressure drying method, a freeze-drying method, a drying method using infrared radiation, decantation, filtration, etc. can be applied.

The resin particles (B) can be pulverized after drying. The method of pulverization is not particularly limited and ordinary pulverizing apparatuses (e.g., a hammer type pulverizer, an impact type pulverizer, a roll type pulverizer, and a jet airflow type pulverizer) can be used. The pulverized crosslinked polymer can be adjusted in its particle size by sieving, etc., if necessary.

In the case of sieving the particles as needed, the resin particles (B) containing the crosslinked polymer (A), which contain the crosslinked polymer (A) as the main ingredient thereof, may contain a small amount of some other ingredients such as a residual solvent and a residual crosslinked component under certain circumstances. The weight average particle diameter ($\mu$m) of the resin particles (B) is preferably 100 to 800, more preferably 200 to 700, even more preferably 250 to 600, particularly preferably 300 to 500, and most preferably 350 to 450. Within such ranges, the absorption performance is further improved.

The weight average particle diameter is measured by the method disclosed in Perry's Chemical Engineers' Handbook, Sixth Edition (McGraw-Hill Book Company, 1984, page 21) by using a RO-TAP sieve shaker and standard sieves (JIS Z8801-1:2006). Specifically, JIS standard sieves are combined, for example, in the order of 1000 $\mu$m, 850 $\mu$m, 710 $\mu$m, 500 $\mu$m, 425 $\mu$m, 355 $\mu$m, 250 $\mu$m, 150 $\mu$m, 125 $\mu$m, 75 $\mu$m, 45 $\mu$m, and a bottom tray when viewed from the top. About 50 g of particles to be measured are put on the top sieve and then shaken for five minutes by a RO-TAP sieve shaker. Then, the particles received on the respective sieves and the bottom tray are weighed and the weight fractions of the particles on the respective sieves are calculated with the total weight of the particles considered to be 100% by weight. The calculated values are plotted on a logarithmic probability sheet {taking the size of openings of a sieve (particle diameter) as abscissa and the weight fraction as ordinate} and then a line connecting the respective points is drawn. Subsequently, a particle diameter that corresponds to a weight fraction of 50% by weight is determined and this is defined as a weight average particle diameter.

Since a smaller content of particulates contained in the resin particles (B) results in better absorption performance, the content (% by weight) of the particulates being 106 $\mu$m or less in size (preferably being 150 $\mu$m or less in size) in the total weight of the resin particles (B) containing the crosslinked polymer (A) is preferably 3 or less, and more preferably 1 or less. The content of the particulates can be determined using a graph prepared when determining the aforementioned weight average particle diameter.

The shape of the resin particles (B) is not particularly limited and may be an irregularly pulverized form, a scaly form, a pearl-like form, a rice grain form, etc. Among these, an irregularly pulverized form is preferred because good entangling with a fibrous material in an application such as disposable diaper is ensured and the fear of falling off from the fibrous material is eliminated.

The resin particles (B) containing the crosslinked polymer (A) may be treated with a hydrophobic substance, if necessary, and methods disclosed in JP-A-2013-231199, etc. can be utilized.

The method for producing aqueous-liquid absorbent resin particles (P) of the present invention includes at least two surface crosslinking steps of crosslinking the surface of the resin particles (B) containing the crosslinked polymer (A) with the surface crosslinking agent (c), wherein different crosslinking agents (c) are used in the first surface crosslinking step and the second surface crosslinking step.

As the surface crosslinking agent (c), there can be used conventional surface crosslinking agents (e.g., polyglycidyl compounds, polyamines, polyaziridine compounds, polyisocyanate compounds, etc. disclosed in JP-A-59-189103; polyhydric alcohols disclosed in JP-A-58-180233 and JP-A-61-16903; silane coupling agents disclosed in JP-A-61-211305 and JP-A-61-252212; alkylene carbonates disclosed in JP-A-5-508425; polyoxazoline compounds disclosed in JP-A-11-240959; and polyvalent metal salts disclosed in JP-A-51-136588 and JP-A-61-257235). The surface crosslinking agent (c) may be used singly or two or more of the same may be used in combination.

Among these surface crosslinking agents (c), a surface crosslinking agent including a polyglycidyl compound and/or a polyvalent metal salt is preferably used in the first surface crosslinking step from the viewpoint of absorption characteristics and moisture absorption blocking properties, and it is more preferred to use a polyglycidyl compound and a polyvalent metal salt in combination.

Examples of preferable polyglycidyl compounds include polyglycidyl ethers of polyhydric alcohols, such as ethylene glycol diglycidyl ether, glycerol triglycidyl ether, and sorbitol polyglycidyl ether. The epoxy equivalent weight of a polyglycidyl compound is preferably 60 to 600, and more preferably 100 to 300, and the number of functional groups is preferably 2 to 6, and more preferably 2 to 4. The epoxy equivalent weight means the value calculated by dividing the molecular weight of the polyglycidyl compound by the number of the glycidyl groups in one molecule of the compound. These polyglycidyl compounds may be used singly or two or more of the same may be used in combination.

Examples of preferable polyvalent metal salts include inorganic acid salts of zirconium, aluminum, or titanium, and examples of inorganic acids to form polyvalent metal salts include sulfuric acid, hydrochloric acid, nitric acid, hydrobromic acid, hydroiodic acid, and phosphoric acid. Examples of an inorganic acid salt of zirconium include zirconium sulfate and zirconium chloride; examples of an inorganic acid salt of aluminum include aluminum sulfate, aluminum chloride, aluminum nitrate, aluminum ammonium sulfate, aluminum potassium sulfate, and aluminum sodium sulfate; and examples of an inorganic acid salt of titanium include titanium sulfate, titanium chloride, and titanium nitrate.

Among these, inorganic acid salts of aluminum and inorganic acid salts of titanium are preferred from the viewpoint of easy availability and solubility, aluminum sulfate, aluminum chloride, aluminum potassium sulfate, and aluminum sodium sulfate are more preferred, aluminum sulfate and aluminum sodium sulfate are particularly preferred, and aluminum sodium sulfate is most preferred. These polyvalent metal salts may be used singly or two or more of the same may be used in combination.

In the second surface crosslinking step, it is preferred from the viewpoint of absorption characteristics and moisture absorption blocking properties to use a surface crosslinking agent selected from the group consisting of polyhydric alcohols, alkylene carbonates, polyoxazoline compounds, and polyaziridine compounds, and particularly preferred are alkylene carbonates.

The number of the carbon atoms of the polyhydric alcohol is preferably 2 to 10, and more preferably 2 to 8.

The number of the carbon atoms of the alkylene group of the alkylene carbonate is preferably 2 to 10, and more preferably 2 to 8.

The oxazoline value of the polyoxazoline compound is preferably 60 to 600, and more preferably 100 to 300. The oxazoline value means the value calculated by dividing the molecular weight of the polyoxazoline compound by the number of the oxazoline groups in one molecule of the compound.

The aziridine group content of the polyaziridine compound is preferably 1 to 20mmol/g, and more preferably 3 to 15 mmol/g.

The amount (% by weight) of the surface crosslinking agent (c) used in the surface crosslinking treatment is not particularly limited because it can be varied depending upon the type of the surface crosslinking agent, the conditions for crosslinking, target performance, etc.; however, from the viewpoint of absorption characteristics, etc., it is preferably from 0.001 to 3, more preferably from 0.005 to 2, and particularly preferably from 0.01 to 1, based on the total weight of the water-soluble monomer (a1), the hydrolyzable vinyl monomer (a2), and the crosslinking agent (b).

The surface crosslinking agent (c) in the surface crosslinking step is used by being diluted in a solvent, if necessary. The type of the solvent is not particularly limited, and polyhydric alcohols (ethylene glycol, propylene glycol, 1,4-butanediol, etc.) and water are suitably used, and such solvents may be used either singly or in combination.

The apparatus to be used in order to uniformly mix the resin particles (B) containing the crosslinked polymer (A) with the surface crosslinking agent in the surface crosslinking step may be an ordinary mixing machine, and examples thereof include a cylindrical mixer, a screw type mixer, a screw type extruder, a Turbulizer, a Nauta mixer, a double-arm kneader, a fluidization mixer, a V-type mixer, a mincing mixer, a ribbon mixer, a fluidization mixer, an airflow mixer, a rotating disc mixer, a conical blender, and a roll mixer.

The temperature for uniformly mixing the resin particles (B) containing the crosslinked polymer (A) with the surface crosslinking agent in the surface crosslinking step, which is not particularly limited, is preferably 10 to 150°C more preferably 20 to 100°C, and particularly preferably 25 to 80°C.

In the first surface crosslinking step, it is preferred to heat to a temperature of not lower than 100°C and lower than 150°C after uniformly mixing the resin particles (B) containing the crosslinked polymer (A) with the surface crosslinking agent, and the heating temperature is more preferably 110 to 145°C, and particularly preferably 125 to 140°C from the viewpoint of absorption characteristics. The heating time in the first surface crosslinking step is preferably 5 to 60 minutes, and more preferably 10 to 40 minutes from the viewpoint of absorption characteristics. If the heating time is outside of this range, the absorption performance or the moisture absorption blocking property may deteriorate.

In the second surfaces crosslinking step, it is preferred to heat to a temperature of not lower than 165°C and lower than 190°C after uniformly mixing the resin particles surface crosslinked in the first surface crosslinking step with the surface crosslinking agent, and the heating temperature is more preferably 167 to 180°C, and particularly preferably 170 to 175°C from the viewpoint of absorption characteristics. The heating time in the second surfaces crosslinking step is preferably 5 to 60 minutes, and more preferably 10 to 40 minutes from the viewpoint of absorption characteristics. If the heating time is outside of this range, the absorption performance or the moisture absorption blocking property may deteriorate.

When including three or more surface crosslinking steps, the heating temperature in the third or subsequent surface crosslinking step is preferably not lower than 165°C and lower than 190°C and the heating time is preferably 5 to 60 minutes.

The aqueous-liquid absorbent resin articles (P) produced by the production method of the present invention are aqueous-liquid absorbent resin articles which are resin particles (B) containing a crosslinked polymer (A) having, as essential constitutional units, a water-soluble vinyl monomer (a1) and/or a vinyl monomer (a2) to be converted into the water-soluble vinyl monomer (a1) by hydrolysis and a crosslinking agent (b) prepared by the method described above and which have a multilayered shell structure with a multilayered surface crosslinked structure.

The aqueous-liquid absorbent resin particles (P) produced by the production method of the present invention can, if necessary, contain additives (e.g., conventional (disclosed in JP-A-2003-225565 and JP-A-2006-131767) antiseptics, antifungal agents, antibacterial agents, antioxidants, UV absorbers, coloring agents, aromatics, deodorants, liquid permeation improvers, organic fibrous materials, etc.). When such an additive is contained, the content (% by weight) of the additive, based on the weight of the crosslinked polymer (A1), is preferably 0.001 to 10, more preferably 0.01 to 5, particularly preferably 0.05 to 1, and most preferably 0.1 to 0.5.

The moisture absorption blocking property of the aqueous-liquid absorbent resin particles (P) produced by the production method of the present invention is preferably 0 to 50%, more preferably 0 to 30%, and particularly preferably 0 to 20%. Within this range, it is less susceptible to a blocking problem regardless of working environment. The moisture absorption blocking property is measured by the method described below.

The dynamic friction energy (mJ) of the aqueous-liquid absorbent resin particles (P) produced by the production method of the present invention is preferably 1000 to 3000, more preferably 1300 to 2800, and particularly preferably 1500 to 2500. Within this range, the flow rate during the diaper production is stabilized. The dynamic friction energy is measured by the method described below.

The apparent density (g/ml) of the aqueous-liquid absorbent resin particles (P) produced by the production method of the present invention is preferably 0.54 to 0.70, more preferably 0.56 to 0.65, and particularly preferably 0.58 to 0.60. Within such ranges, the skin irritation resistance of an absorbent article is further improved. The apparent density of (P) is measured at 25°C in accordance with JIS K7365:1999.

The absorbent of the present invention contains the aqueous-liquid absorbent resin particles (P) produced by the production method of the present invention. The aqueous-liquid absorbent resin particles (P) may be used alone as the absorbent, or alternatively may be processed together with a different material to form the absorbent.

Examples of the different material include a fibrous material. The structure and the production method of the absorbent in the case of using together with a fibrous material are analogous to conventional structures and methods (JP-A-2003-225565, JP-A-2006-131767, JP-A-2005-097569, etc.).

Preferred as the fibrous material are cellulosic fiber, organic synthetic fiber and mixtures of cellulosic fiber and organic synthetic fiber.

Examples of the cellulosic fiber include natural fibers such as fluff pulp and cellulosic chemical fibers such as viscose rayon, acetate rayon, and cuprammonium rayon. Such cellulosic natural fibers are not particularly limited with respect to their source material (needle-leaf trees, broadleaf trees, etc.), production method (chemical pulp, semichemical pulp, mechanical pulp, CTMP, etc.), bleaching method, etc.

Examples of the organic synthetic fiber include polypropylene fiber, polyethylene fiber, polyamide fiber, polyacrylonitrile fiber, polyester fiber, polyvinyl alcohol fiber, polyurethane fiber, and heat-fusable composite fiber (fiber in which at least two of said fibers differing in melting point are hybridized in a sheath-core type, an eccentric type, a parallel type, or the like, fiber in which at least two of said fibers are blended, and fiber in which the surface layer of said fibers is modified, etc.).

Preferred among these fibrous base materials are cellulosic natural fiber, polypropylene fiber, polyethylene fiber, polyester fiber, heat-fusable composite fiber, and mixed fiber thereof, and fluff pulp, heat-fusable fiber, and mixed fiber thereof are more preferred in that a resulting absorber is excellent in shape retention after water absorption.

The fibrous material is not particularly limited in length and thickness, and it can suitably be used if its length is within the range of 1 to 200 mm and its thickness is within the range of 0.1 to 100 deniers. The shape thereof is also not particularly limited if it is fibrous, and examples of the shape include a narrow cylindrical form, a split yarn form, a staple form, a filament form, and a web form.

When the aqueous-liquid absorbent resin particles (P) are processed together with a fibrous material to form an absorbent, the weight ratio of the aqueous-liquid absorbent resin particles (P) to the fiber (the weight of the aqueous-liquid absorbent resin particles/the weight of the fiber) is preferably from 40/60 to 90/10, and more preferably from 70/30 to 80/20.

The absorbent article of the present invention includes the absorbent described above. The absorbent article can be applied not only as sanitary goods such as a disposable diaper or a sanitary napkin but also as items to be used for various applications such as absorbent materials or retention materials for various types of aqueous liquid, a gelling agent, etc. The method for producing the absorbent article is analogous to conventional methods (those disclosed in JP-A-2003-225565, JP-A-2006-131767, and JP-A-2005-097569, etc.).

EXAMPLES

The present invention is further described below by means of Examples and Comparative Examples, but the present invention is not limited thereto. Hereinafter, unless otherwise stated, "part (s) " means "part (s) by weight" and "%" means "% by weight." The water retaining capacity relative to physiological saline, the amount of absorption under load, the moisture absorption blocking property, and the dynamic friction energy of aqueous-liquid absorbent resin particles were measured by the methods described below.

<Method for measuring water retaining capacity>

1.00 g of a measurement sample was put into a tea bag (20 cm long, 10 cm wide) made of nylon net with a mesh size of 63 $\mu$m (JIS Z8801-1:2006) and then was immersed in 1,000 ml of physiological saline (salt concentration: 0.9%) for 1 hour without stirring, followed by pulling up and draining off water by hanging the tea bag for 15 minutes. Then, the sample in the tea bag was put in a centrifuge and centrifugally dewatered at 150 G for 90 seconds, thereby removing excess physiological saline. Subsequently, the weight (h1) of the sample including the tea bag was measured and then a water retaining capacity was calculated from the following formula. The temperature of the physiological saline used and that of the measurement atmosphere were adjusted to 25°C ± 2°C.

$$\texttt{Water retaining capacity (g/g) = (h1) - (h2)}$$

(h2) is the weight of the tea bag measured with no measurement sample by analogous procedures to those described above.

<Method for measuring the amount of absorption under load>

Into a cylindrical plastic tube (inner diameter: 25 mm, height: 34 mm) with a nylon net having a mesh size of 63 $\mu$m (JIS Z8801-1:2006) attached to the bottom of the tube, there was weighed 0.16 g of a measurement sample screened into the range of 250 to 500 $\mu$m using a 30 mesh sieve and a 60 mesh sieve, and then the cylindrical plastic tube was made to stand vertically and the measurement sample was leveled to have an almost uniform thickness on the nylon net and then a weight (weight: 310.6 g, outer diameter: 24.5 mm) was put on the measurement sample. The weight (M1) of the cylindrical plastic tube as the whole was measured, and then the cylindrical plastic tube containing the measurement sample and the weight was made to stand vertically in a petri dish (diameter: 12 cm) containing 60 ml of physiological saline (salt concentration: 0.9%) and was immersed with the nylon net side facing down and was left standing for 60 minutes. After a lapse of 60 minutes, the cylindrical plastic tube was pulled up from the petri dish and then was tilted to draw the water attaching to the bottom of the tube to drip in the form of water drops, thereby removing excess water. Then, the weight (W2) of the cylindrical plastic tube containing the measurement sample and the weight as the whole was measured and then the amount of absorption under load was determined from the following formula. The temperature of the physiological saline used and that of the measurement atmosphere were 25°C ± 2°C.

$$\text{The amount (g/g) of absorption under load} = \{(M2) - (M1)\}/0.16$$

<Method for measuring moisture absorption blocking ratio>

Into a cylindrical aluminum dish having a diameter of 5 cm was placed uniformly 10 g of a measurement sample having passed through a wire gauze having a mesh size of 850 $\mu$m (JIS Z8801-1:2001), which was left standing for 3 hours in a thermohygrostat adjusted to 40±1°C and a relative humidity of 80±5%. The whole weight (f) of the measurement sample left standing for 3 hours was measured, and then the sample was sieved by tapping five times on a wire gauze having a mesh size of 1400 $\mu$m (JIS Z8801-1:2001) . Then, the weight (b) of the resin particles remaining on the wire gauze having a mesh size of 1400 $\mu$m due to blocking caused by moisture was measured, and a moisture absorption blocking ratio was calculated from the following formula.

$$\text{Moisture absorption blocking ratio (\%)} = (b/a) \times 100$$

<Method for measuring dynamic friction energy>

As to dynamic friction energy, measurement was carried out seven times in succession under conditions including measurement atmosphere: 25°C, relative humidity: 50%, sample amount: 105 g in a 160 ml split container, and blade rotation speed: 100 mm/sec using FT4 Powder Rheometer (manufactured by Freeman Technology), and the total amount of energy in the seventh measurement was taken as a dynamic friction energy. The dynamic friction energy is the energy consumed when powder is mixed and friction is developed; the smaller the value thereof, the higher the flowability of the powder.

<Example 1>

131 parts of acrylic acid (a1-1) {produced by Mitsubishi Chemical Corporation, purity: 100%}, 0.44 parts of a crosslinking agent (b-1) {pentaerythritol triallyl ether, produced by Daiso Co., Ltd.}, and 362 parts of deionized water were kept at 3°C under stirring and mixing. After adjusting the dissolved oxygen amount to 1 ppm or less by introducing nitrogen into this mixture, 0.5 parts of a 1% aqueous solution of hydrogen peroxide, 1 part of a 2% aqueous solution of ascorbic acid, and 0.1 parts of a 2% aqueous solution of 2,2'-azobis(amidinopropane)dihydrochloride were added and mixed, so that polymerization was initiated. After the temperature of the mixture reached 80°C, polymerization was performed at 80±2°C for about 5 hours, thereby obtaining hydrous gel.

Then, while chopping the hydrous gel with a mincing machine (12VR-400K, manufactured by ROYAL), 162 parts of a 45% aqueous solution of sodium hydroxide was added and mixed to neutralize, thereby obtaining a neutralized gel. Then, the neutralized hydrous gel was dried in a through-air drier (at 200°C, wind speed: 2 m/second), thereby obtaining a dried material. The dried material was pulverized with a juicing blender (OSTERIZER BLENDER manufactured by Oster) and then sieved to adjust the particle size range according to mesh size from 150 to 710 $\mu$m, thereby obtaining resin particles (B-1) containing crosslinked polymer particles.

Subsequently, while stirring 100 parts of the resulting resin particles (B-1) at high speed (by using "High-speed stirring turbulizer" manufactured by Hosokawa Micron Corporation, rate of revolution: 2000 rpm), a mixed solution prepared by mixing 0.08 parts of ethylene glycol diglycidyl ether as a first surface crosslinking agent, 0.9 parts of propylene glycol as a solvent, and 1.4 parts of water was added thereto, mixed uniformly, then heated at 130°C for 30 minutes, then cooled to room temperature, and then while stirring at high speed (by using "High-speed stirring turbulizer" manufactured by Hosokawa Micron Corporation, rate of revolution: 2000 rpm), a mixed solution prepared by mixing 1 part of ethylene carbonate as a second surface crosslinking agent and 5 parts of water as a solvent was added, mixed uniformly, and heated at 170°C for 30 minutes, so that aqueous-liquid absorbent resin particles (P-1) of the present invention were obtained.

<Example 2>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed solution prepared by mixing 0.08 parts of ethylene glycol diglycidyl ether as a first surface crosslinking agent, 0.9 parts of propylene glycol as a solvent, and 1.4 parts of water was added thereto, mixed uniformly, then heated at 130°C for 30 minutes, then cooled to room temperature, and then while stirring at high speed (by using "High-speed stirring turbulizer" manufactured by Hosokawa Micron Corporation, rate of revolution: 2000 rpm), a mixed solution prepared by mixing 2 parts of 1, 4-butanediol as a second surface crosslinking agent and 5 parts of water as a solvent was added, mixed uniformly, and heated at 170°C for 30 minutes, so that aqueous-liquid absorbent resin particles (P-2) of the present invention were obtained.

<Example 3>

Aqueous-liquid absorbent resin particles (P-3) of the present invention were obtained in the same manner as in Example 2, except that 2 parts of 1,4-butanediol was exchanged for 1 part of EPOCROS WS700 (produced by NIPPON SHOKUBAI CO., LTD., oxazoline group-containing water-soluble polymer; nonvolatile content: 25%, oxazoline value: 220).

<Example 4>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed solution prepared by mixing 0.08 parts of ethylene glycol diglycidyl ether as a first surface crosslinking agent, 0.9 parts of propylene glycol as a solvent, 0.6 parts of aluminum sodium sulfate dodecahydrate as a polyvalent metal salt, and 2.3 parts of water was added thereto, mixed uniformly, then heated at 110°C for 30 minutes, then cooled to room temperature, and then while stirring at high speed (by using "High-speed stirring turbulizer" manufactured by Hosokawa Micron Corporation, rate of revolution: 2000 rpm), a mixed solution prepared by mixing 1 part of ethylene carbonate as a second surface crosslinking agent and 5 parts of water as a solvent was added, mixed uniformly, and then heated at 175°C for 30 minutes, so that aqueous-liquid absorbent resin particles (P-4) of the present invention were obtained.

<Example 5>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed solution prepared by mixing 0.08 parts of ethylene glycol diglycidyl ether as a first surface crosslinking agent, 0.9 parts of propylene glycol as a solvent, and 1.4 parts of water was added thereto, mixed uniformly, then heated at 100°C for 50 minutes, then cooled to room temperature, and then while stirring at high speed (by using "High-speed stirring turbulizer" manufactured by Hosokawa Micron Corporation, rate of revolution: 2000 rpm), a mixed solution prepared by mixing 1 part of ethylene carbonate as a second surface crosslinking agent and 5 parts of water as a solvent was added, mixed uniformly, and then heated at 185°C for 15 minutes, so that aqueous-liquid absorbent resin particles (P-5) of the present invention were obtained.

<Example 6>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed solution prepared by mixing 0.08 parts of ethylene glycol diglycidyl ether as a first surface crosslinking agent, 0.9 parts of propylene glycol as a solvent, 0.6 parts of aluminum sodium sulfate dodecahydrate as a polyvalent metal salt, and 2.3 parts of water was added thereto, mixed uniformly, then heated at 148°C for 30 minutes, then cooled to room temperature, and then while stirring at high speed (by using "High-speed stirring turbulizer" manufactured by Hosokawa Micron Corporation, rate of revolution: 2000 rpm), a mixed solution prepared by mixing 2 parts of 1, 4-butanediol as a second surface crosslinking agent and 5 parts of water as a solvent was added, mixed uniformly, and then heated at 180°C for 20 minutes, so that aqueous-liquid absorbent resin particles (P-6) of the present invention were obtained.

<Example 7>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed solution prepared by mixing 0.08 parts of ethylene glycol diglycidyl ether as a first surface crosslinking agent, 0.9 parts of propylene glycol as a solvent, and 1.4 parts of water was added thereto, mixed uniformly, then heated at 100°C for 50 minutes, then cooled to room temperature, and then while stirring at high speed (by using "High-speed stirring turbulizer" manufactured by Hosokawa Micron Corporation, rate of revolution: 2000 rpm), a mixed solution prepared by mixing 2 parts of 1, 4-butanediol as a second surface crosslinking agent and 5 parts of water as a solvent was added, mixed uniformly, and heated at 185°C for 20 minutes, so that aqueous-liquid absorbent resin particles (P-7) of the present invention were obtained.

<Example 8>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed solution prepared by mixing 0.08 parts of ethylene glycol diglycidyl ether as a first surface crosslinking agent, 0.9 parts of propylene glycol as a solvent, 0.6 parts of aluminum sodium sulfate dodecahydrate as a polyvalent metal salt, and 2.3 parts of water was added thereto, mixed uniformly, then heated at 145°C for 30 minutes, then cooled to room temperature, and then while stirring at high speed (by using "High-speed stirring turbulizer" manufactured by Hosokawa Micron Co., rate of revolution: 2000 rpm), a mixed solution prepared by mixing 1 part of EPOCROS WS700 (produced by NIPPON SHOKUBAI CO., LTD. , oxazoline group-containing water-soluble polymer; nonvolatile content: 25%, oxazoline value: 220) as a second surface crosslinking agent and 5 parts of water as a solvent was added, mixed uniformly, and then heated at 167°C for 40 minutes, so that aqueous-liquid absorbent resin particles (P-8) of the present invention were obtained.

<Example 9>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed solution prepared by mixing 0.08 parts of ethylene glycol diglycidyl ether as a first surface crosslinking agent, 0.9 parts of propylene glycol as a solvent, and 1.4 parts of water was added thereto, mixed uniformly, then heated at 100°C for 50 minutes, then cooled to room temperature, and then while stirring at high speed (by using "High-speed stirring turbulizer" manufactured by Hosokawa Micron Corporation, rate of revolution: 2000 rpm), a mixed solution prepared by mixing 1 part of EPOCROS WS700 (produced by NIPPON SHOKUBAI CO., LTD. , oxazoline group-containing water-soluble polymer; nonvolatile content: 25%, oxazoline value: 220) as a second surface crosslinking agent and 5 parts of water as a solvent was added, mixed uniformly, and then heated at 185°C for 15 minutes, so that aqueous-liquid absorbent resin particles (P-9) of the present invention were obtained.

<Comparative Example 1>

While stirring 100 parts of resin particles (B-1) prepared in the same manner as Example 1 at high speed (by using "High-speed stirring turbulizer" manufactured by Hosokawa Micron Co., rate of revolution: 2000 rpm), a mixed solution prepared by mixing 0.08 parts of ethylene glycol diglycidyl ether as a surface crosslinking agent, 0.9 parts of propylene glycol as a solvent, and 1.4 parts of water as a solvent was added thereto, mixed uniformly, and then heated at 130°C for 30 minutes, so that aqueous-liquid absorbent resin particles (P'-1) for comparison purpose were obtained.

<Comparative Example 2>

While stirring 100 parts of resin particles (B-1) prepared in the same manner as Example 1 at high speed (by using "High-speed stirring turbulizer" manufactured by Hosokawa Micron Corporation, rate of revolution: 2000 rpm), a mixed solution prepared by mixing 1 part of ethylene carbonate as a surface crosslinking agent and 5 parts of water was added thereto, mixed uniformly, and then heated at 170°C for 30 minutes, so that aqueous-liquid absorbent resin particles (P'-2) for comparison purpose were obtained.

<Comparative Example 3>

Aqueous-liquid absorbent resin particles (P'-3) for comparison purpose were obtained by uniformly mixing 0.2 parts of silica (Aerosil 200, produced by NIPPON AEROSIL CO., LTD.) with 100 parts of the aqueous-liquid absorbent resin particles (P'-1) of Comparative Example 1.

For the aqueous-liquid absorbent resin particles (P-1) to (P-9) obtained in Examples 1 to 9 and the aqueous-liquid absorbent resin particles for comparison (P'-1) to (P'-3) obtained in Comparative Examples 1 to 3, the results of measuring the water retaining capacity, the amount of absorption under load, the moisture absorption blocking ratio, and the dynamic friction energy are shown in Table 1.

[Table 1]

| | | Water retaining capacity (g/g) | Amount of absorption under lead (g/g) | Moisture absorption blocking ratio (%) | Dynamic friction energy (mJ) |
|---|---|---|---|---|---|
| Example | 1 | 43 | 22 | 18 | 1810 |
| | 2 | 45 | 20 | 19 | 1720 |
| | 3 | 44 | 21 | 21 | 1740 |
| | 4 | 41 | 24 | 7 | 2120 |
| | 5 | 44 | 20 | 24 | 1770 |
| | 6 | 43 | 21 | 11 | 2230 |
| | 7 | 45 | 17 | 36 | 1880 |
| | 8 | 42 | 22 | 9 | 2090 |
| | 9 | 44 | 18 | 29 | 1710 |
| Comparative Example | 1 | 44 | 12 | 51 | 1790 |
| | 2 | 53 | 9 | 64 | 1830 |
| | 3 | 44 | 9 | 11 | 3110 |

INDUSTRIAL APPLICABILITY

The aqueous-liquid absorbent resin particles (P) of the present invention are superior in moisture absorption blocking properties, absorption under load, and powder feeding properties, and high-performance absorbents can be obtained therefrom stably without depending on surrounding environment during the production of absorbents. Accordingly, they are suitably used for sanitary goods, such as disposable diapers (a disposable diaper for children, a disposable diaper for adults, etc.), napkins (a sanitary napkin, etc.), paper towel, pads (an incontinence pad, a surgical underpad, etc.), and pet sheets (a pet urine absorbing sheet), and is extremely suited for disposable diapers. Moreover, the aqueous-liquid absorbent resin particles of the present invention are useful not only for sanitary goods but also for other various applications such as a pet urine absorbent, a urine gelatinizer of a portable toilet, an agent for preserving freshness of vegetables and fruits etc., a drip absorbent for meats and fishes, a refrigerant, a disposable body warmer, a battery gelatinizer, a water retention agent for plants, soil, etc., a condensation preventing agent, a waterstopping material, packing material, artificial snow, etc.

**Claims**

1. A method for producing aqueous-liquid absorbent resin articles (P) comprising at least two surface crosslinking steps of crosslinking with a surface crosslinking agent (c) the surfaces of resin particles (B) containing a crosslinked polymer (A) having, as essential constitutional units, a water-soluble vinyl monomer (a1) and/or a vinyl monomer (a2) to be converted into the water-soluble vinyl monomer (a1) by hydrolysis and a crosslinking agent (b), wherein different surface crosslinking agents (c) are used in a first surface crosslinking step and a second crosslinking step.

2. The production method according to claim 1, wherein the surface crosslinking agent (c) used in the first surface crosslinking step comprises a polyglycidyl compound and/or a polyvalent metal salt.

3. The production method according to claim 1 or 2, wherein the surface crosslinking agent (c) used in the second surface crosslinking step comprises at least one surface crosslinking agent selected from the group consisting of a polyhydric alcohol, an alkylene carbonate, a polyoxazoline compound, and a polyaziridine compound.

4. The production method according to any one of claims 1 to 3, wherein the heating temperature of the first surface crosslinking step is not lower than 100°C and lower than 150°C.

5. The production method according to any one of claims 1 to 4, wherein the heating temperature of the second surface crosslinking step is not lower than 165°C and lower than 190°C.

6. An absorbent comprising aqueous-liquid absorbent resin articles (P) produced using the production method according to any one of claims 1 to 5.

7. An absorbent article comprising the absorbent according to claim 6.

## INTERNATIONAL SEARCH REPORT

| International application No. |
|---|
| PCT/JP2016/056983 |

A. CLASSIFICATION OF SUBJECT MATTER
*C08J3/12*(2006.01)i, *C08J3/24*(2006.01)i

According to International Patent Classification (IPC) or to both national classification and IPC

B. FIELDS SEARCHED

Minimum documentation searched (classification system followed by classification symbols)
C08J3/00-28, C08F

| Documentation searched other than minimum documentation to the extent that such documents are included in the fields searched |
|---|
| Jitsuyo Shinan Koho     1922-1996    Jitsuyo Shinan Toroku Koho    1996-2016 |
| Kokai Jitsuyo Shinan Koho    1971-2016    Toroku Jitsuyo Shinan Koho    1994-2016 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2008/108277 A1   (Nippon Shokubai Co., Ltd.), 12 September 2008 (12.09.2008), claims; paragraphs [0073] to [0093], [0108]; examples & US 2010/0072421 A1 claims; paragraphs [0078] to [0098], [0113]; examples & EP 2116572 A1          & CN 101627086 A | 1-7 |
| X | WO 2012/102407 A1   (Nippon Shokubai Co., Ltd.), 02 August 2012 (02.08.2012), claims; paragraphs [0200] to [0202]; examples; table 8 & US 2014/0031473 A1 claims; examples; table 8 & EP 2669318 A1          & CN 103459473 A | 1-7 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 May 2016 (26.05.16) | 07 June 2016 (07.06.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2016/056983 |

C (Continuation).   DOCUMENTS CONSIDERED TO BE RELEVANT

| Category* | Citation of document, with indication, where appropriate, of the relevant passages | Relevant to claim No. |
|---|---|---|
| X | WO 2014/041968 A1  (Nippon Shokubai Co., Ltd.), 20 March 2014 (20.03.2014), claims; paragraphs [0162], [0163], [0172], [0177] to [0180]; examples & US 2015/0225514 A1 claims; paragraphs [0294] to [0296], [0307], [0313] to [0317]; examples & EP 2896645 A1          & CN 104619755 A & KR 10-2015-0056572 A | 1-7 |
| X A | JP 9-502221 A  (Chemische Fabrik Stockhausen GmbH), 04 March 1997 (04.03.1997), claims; examples & US 5672633 A claims; examples & WO 1995/009014 A1      & EP 721354 A1 & DE 4333056 A          & AU 7783594 A & CA 2171085 A | 1,3,5-7 2,4 |
| A | WO 2014/021388 A1  (Nippon Shokubai Co., Ltd.), 06 February 2014 (06.02.2014), entire text (Family: none) | 1-7 |
| A | JP 2012-161788 A  (Nippon Shokubai Co., Ltd.), 30 August 2012 (30.08.2012), entire text & JP 2005-111474 A      & US 2007/0123658 A1 & WO 2005/027986 A1      & EP 1677845 A1 & KR 10-2006-0072148 A  & CN 1856331 A & TW 200523281 A | 1-7 |
| A | JP 2005-501960 A  (BASF AG.), 20 January 2005 (20.01.2005), entire text & US 2004/0265387 A1    & WO 2003/022316 A1 & EP 1427452 A1          & DE 10202839 A | 1-7 |
| A | WO 2006/123561 A1  (Sumitomo Seika Chemicals Co., Ltd.), 23 November 2006 (23.11.2006), entire text & US 2008/0280154 A1    & EP 1882701 A1 | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002523526 A
- WO 9533558 A
- JP 62007745 A
- JP 3648553 B
- JP 2003165883 A
- JP 2005075982 A
- JP 2005095759 A
- JP 55133413 A
- JP 54030710 B
- JP 56026909 A
- JP 1005808 A
- JP 2013231199 A

- JP 59189103 A
- JP 58180233 A
- JP 61016903 A
- JP 61211305 A
- JP 61252212 A
- JP 5508425 A
- JP 11240959 A
- JP 51136588 A
- JP 61257235 A
- JP 2003225565 A
- JP 2006131767 A
- JP 2005097569 A

### Non-patent literature cited in the description

- Perry's Chemical Engineers' Handbook. McGraw-Hill Book Company, 1984, 21